# EUROPEAN PATENT SPECIFICATION

(11) **EP 2 743 020 B1**
(45) Date of publication and mention of the grant of the patent: **11.03.2020**
(21) Application number: 13195658.3
(22) Date of filing: 04.12.2013
(51) Int. Cl.: B23B 45/02, B25F 5/00, H01H 9/06, H01H 25/04, H01H 25/06

(54) **Power tool**
Angetriebenes Werkzeug
Outil motorisé

(30) Priority: 13.12.2012 US 201261736920 P; 28.02.2013 US 201313779888
(43) Date of publication of application: 18.06.2014
(73) Proprietor: Black & Decker, Inc., Newark, DE 19711 (US)
(72) Inventor: Puzio, Daniel, Baltimore, MD 21234 (US); Busschaert, Jason, Bel Air, MD 21014 (US); Eshleman, Scott J., Parkville, MD 21234 (US); Schell, Craig Alan, Street, MD 21154 (US); Lopano, Daniel N., Bel Air, MD 21015 (US); Potter, Christine H., Phoenix, MD 21131 (US); Bailey, Rouse Roby, Parkton, MD 21120 (US); Gehret, Robert S., Hampstead, MD 21074 (US); Hill, Jesse P, Baltimore, MD 21214 (US); Hays, James D, Bel Air, MD 21014 (US); Forster, Michael K., White Hall, MD 21161 (US)
(74) Representative: SBD IPAdmin

(56) References cited:
- EP-A2- 0 278 649
- US-A1- 2004 159 449
- US-A1- 2009 188 691
- US-A1- 2010 326 804
- US-B1- 7 594 548

## Description

The present invention relates to a power tool and particularly to user interfaces for power tools.

In present day power tools, users may control tool output through the use of an input switch. This can be in the form of a digital switch in which the user turns the tool on with full output by pressing a button and turns the tool off by releasing the button. More commonly, it is in the form of an analog trigger switch in which the power delivered to the tool's motor is a function of trigger travel. In both of these configurations, the user grips the tool and uses one or more fingers to actuate the switch. The user's finger must travel linearly along one axis to control a rotational motion about a different axis. This makes it difficult for the user to directly compare trigger travel to output rotation and to make quick speed adjustments for finer control.

US 7,594,548 B1 discloses a power tool having all of the features in the pre-characterizing portion of claim 1.

It is an object of the invention to provide a power tool that is easy to control. Accordingly, there is provided a power tool in accordance with claim 1.
Fig. 1 shows a first embodiment of an exemplary power tool.
Fig. 2 is a partial cross-sectional view along a center plane extending through the power tool of FIG. 1.
Fig. 3 is a simplified circuit diagram for the exemplary power tool of FIG. 1.
Fig. 4 shows a second embodiment of the exemplary power tool.
Fig. 5 is a partial cross-sectional view of an alternative user interface, said view extending along a center plane through another exemplary power tool.
Fig. 6 is a partial cross-sectional view of another alternative user interface, said view extending along a center plane through an exemplary power tool.
Fig. 7 is a side view of a power tool with a swipe pad.
Fig. 8 is a partial cross-section of a handle of the exemplary power tool.
Fig. 9 is a simplified circuit diagram of a hand-detecting circuit.
Fig. 10 illustrates an alternative user interface, where Fig. 10A is a cross-sectional view along line X-X of Fig. 7 and line A-A of Fig. 10B, and Fig. 10B is a cross-sectional view along line B-B of Fig. 10A.
Fig. 11 shows another exemplary power tool with a visual information mechanism.
Fig. 12 illustrates another alternative user interface.
Fig. 13 is a simplified circuit diagram incorporating the user interface of Fig. 12.

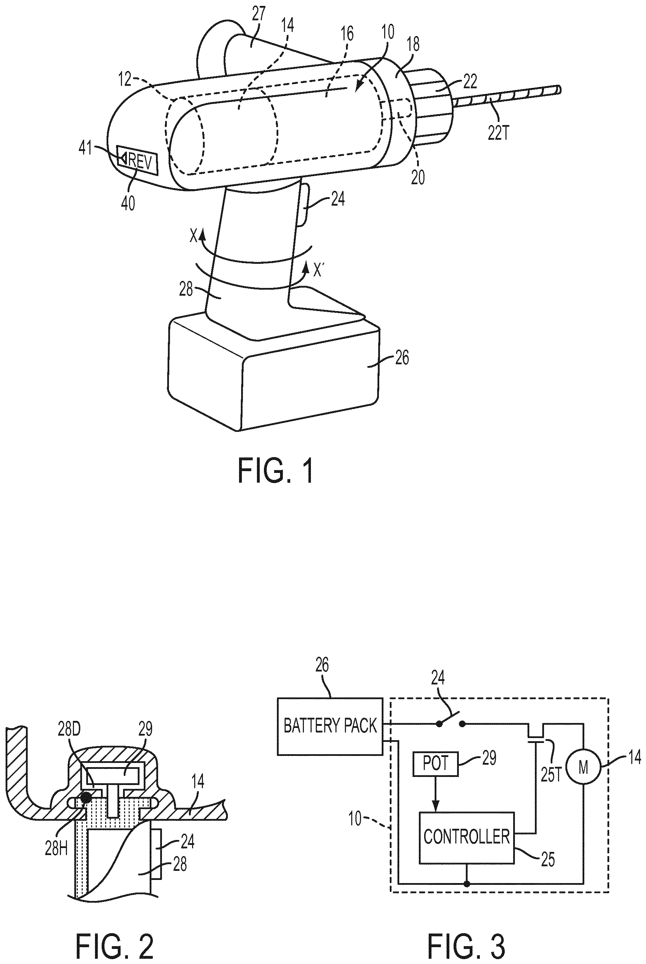

Referring to FIGS. 1 and 2, a power tool constructed in accordance with the teachings of the present invention is generally indicated by reference numeral 10. As those skilled in the art will appreciate, the preferred embodiment of the present invention may be either a corded or cordless (battery operated) device, such as a portable screwdriver or drill. In the particular embodiment illustrated, power tool 10 is a cordless drill having a housing 12, a motor assembly 14, a multi-speed transmission assembly 16, a clutch mechanism 18, an output spindle assembly 20, a chuck 22, a trigger assembly 24 and a battery pack 26. Those skilled in the art will understand that several of the components of power tool 10, such as the chuck 22, the trigger assembly 24 and the battery pack 26, are conventional in nature and need not be described in significant detail in this application. Reference may be made to a variety of publications for a more complete understanding of the operation of the conventional features of power tool 10. One example of such publications is commonly assigned U.S. Pat. Nos. 5,897,454 and 6,431,289.

Battery pack 26 is preferably mechanically connected to handle 28. Handle 28 is preferably rotatably connected to housing 12. Handle 28 is preferably connected to a potentiometer 29 housed within housing 12 so that, when the user rotates handle 28, the value of potentiometer 29 varies. Referring to FIG. 3, the value of potentiometer 29 is then provided to controller 25, which uses that information to control the rotational speed and direction of motor 14 by controlling a FET 25T to affect the amount of power that is transmitted to motor 14.

For further details on the control circuitry used for powering and controlling motor 14, persons skilled in the art are referred to US Patent No. 7,602,137. Persons skilled in the art will recognize that the value of potentiometer 29 will be used instead of the value of the trigger switch and the input of user selector control 30 in US Patent No. 7,602,137.

With such arrangement, the user can rotate handle 28 relative to housing 12 in direction X to select the rotational direction (clockwise) and speed of chuck 22, which carries tool 22T. Similarly, the user can rotate handle 28 relative to housing 12 in direction X' to select the rotational direction (counterclockwise) and speed of chuck 22. Controller 25 receives such information from potentiometer 29 and sends the appropriate amount of power to motor 14 when the user depresses trigger assembly 24. Persons skilled in the art will recognize that a more inexpensive trigger assembly 24 can be used than in typical power tool applications, as trigger assembly 24 needs only to provide 2 states to controller 25 (i.e., on and off), whereas typical trigger assemblies provide the on/off status as well as trigger travel position.

Persons skilled in the art will also recognize that an optoelectronic sensor can be used instead of potentiometer 29 for detecting the rotational direction and distance of handle 28. Because such sensor would preferably have two light gates with a suitable offset from one another, it is possible to determine both the travelled distance (by tracking the number of axle rotations) and the motion direction of the handle 28 via a phase relationship of the two output signals from only one sensor.

Preferably a detent mechanism, such as detent protrusion or ball 28D, is provided for releasably engaging handle 28 and maintaining handle 28 in a selected position. In particular, handle 28 may have depressions 28H that can engage and disengage detent ball 28D as handle 28 is rotated. When the user reaches a desired position, detent ball 28D will maintain handle 28 in the desired rotational position.

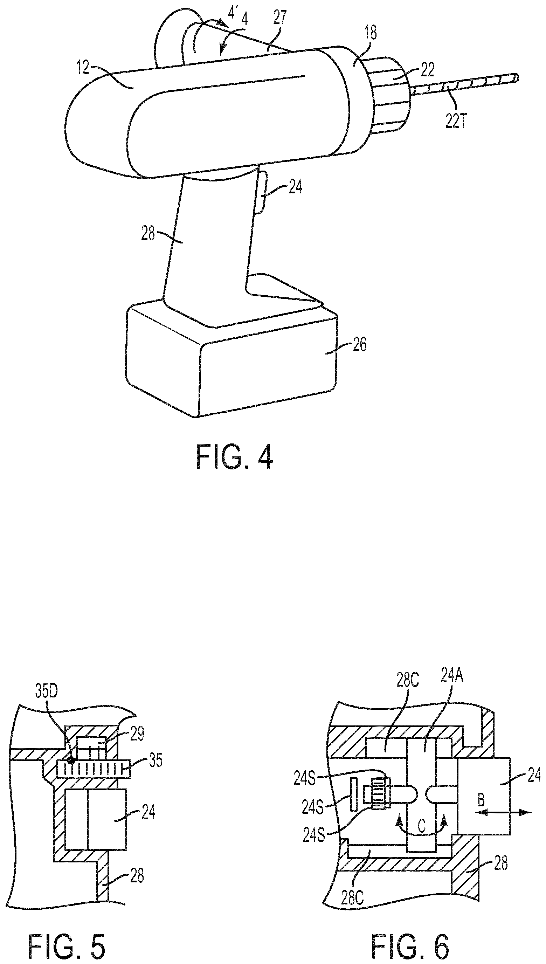

FIG. 4 illustrates an alternate embodiment, where like numerals refer to like parts. In this embodiment, handle 28 is fixedly attached to housing 12, whereas a side handle 27 is rotatably connected to housing 12. As before, a sensor or potentiometer 29 would sense the rotational direction and distance which the user has rotated side handle 27. Preferably a user will rotate the side handle 27 along directions Y and Y' to rotate chuck clockwise and counterclockwise, respectively.

FIG. 5 illustrates a different example not part of the invention, where like parts refer to like numerals. Instead of having handle 28 or side handle 27 connected to encoder or potentiometer 29, a rotary input, such as thumb wheel 35, can be used to control speed.

Trigger assembly 24 may be provided with 2 degrees of freedom. Referring to FIG. 6, trigger assembly 24 may move linearly along direction B (and its opposite). In addition, trigger assembly 24 may also be rotated about an axis along direction C (and its opposite).

One embodiment for providing such result is illustrated in FIG. 6, where trigger assembly 24 includes a post 24A captured within a channel 28C defined within handle 28. Channel 28C allows post 24A (and thus trigger assembly 24) to move linearly along direction B, as well as allow rotational movement of trigger assembly 24 about the axis of post 24A. Force resisting resistors 24S can be provided at the rear of trigger assembly 24 for sensing the force utilized along the linear direction, as well as the rotational position of trigger assembly 24.

In this manner, the user can select the direction of rotation by rotating the trigger assembly 24 rightwardly (for forward) or leftwardly (for reverse). The speed of chuck 22 can be controlled by the amount of linear travel along direction B.

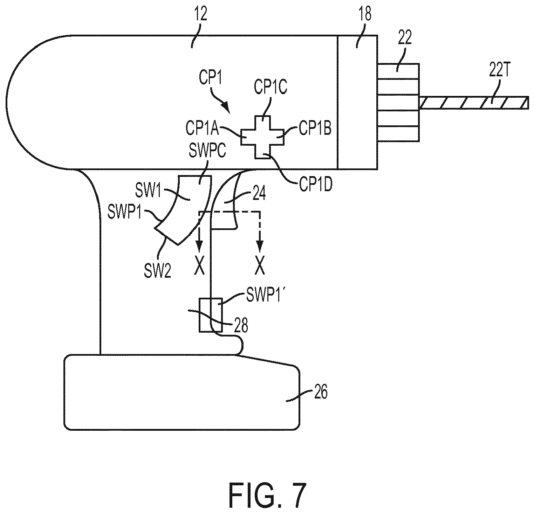

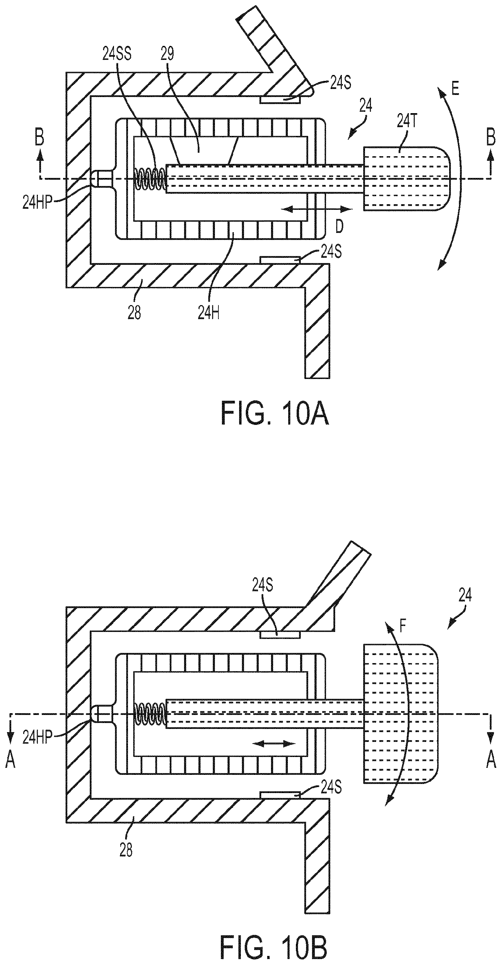

Referring to FIGS. 7 and 10, trigger assembly 24 is provided with three degrees of freedom. In this example, trigger assembly 24 may move linearly along direction D (and its opposite). In addition, trigger assembly 24 may also be rotated about a substantially vertical axis along direction E (and its opposite), i.e., a yaw movement. Finally, trigger assembly 24 may also be rotated about a substantially horizontal axis along direction F (and its opposite), i.e., a pitch movement.

Trigger assembly 24 may include a trigger 24T which is slidably disposed within inner housing 24H. Inner housing 24H preferably carries a linear potentiometer 29, which changes is value according the distance of linear travel (along direction D) of trigger 24T. A spring 24SS biases trigger 24T forwardly.

Inner housing 24H is preferably captured within handle 28, and has a protrusion 24HP that acts as a pivot point, allowing inner housing 24H (and thus trigger 24T) to yaw and pitch along directions E and F, respectively. Force-sensing resistors 24S can be disposed within handle 28 which can sense the direction in which trigger 24T (and inner housing 24H) is rotated by the user, as rotation of trigger 24T causes inner housing 24H to contact the respective force-sensing resistors 24S.

Persons skilled in the art shall recognize that the force-sensing resistors 24S may be substituted with quantum tunneling composites (QTCs), piezoelectrics and/or switches, such as limit switches. It may be especially advantageous to substitute force-sensing resistors are 24S with dome limit switches as such switches will provide the user a tactile feedback.

In this manner, the user can select the direction of rotation by rotating the trigger assembly 24 rightwardly (for forward) or leftwardly (for reverse). The speed of chuck 22 can be controlled by the amount of linear travel along direction D. The user can pitch trigger 24T to provide a further operational input, such as increasing/decreasing maximum speed, changing between operational modes, etc.

FIG. 7 illustrates a different user control usable with power tools 10. In particular, a cross pad CP1 can be disposed on housing 12. A force-sensing resistor can be placed under each spoke CP1A, CP1B, CP1C, CP1D of cross pad CP1. The output of each force-sensing resistor is provided to controller 25, which can use this information to adjust a parameter.

Persons skilled in the art shall recognize that other force-sensing sensors can be used instead of force-sensing resistors. For example, quantum tunneling composites (QTCs) and/or piezoelectrics can be used to provide force or pressure information to controller 25. Alternatively, switches, such as limit switches, can be used to determine which spoke has been pressed by the user.

For example, pressing spoke CP1B may indicate the user's desire to increase the maximum speed of motor 14. Conversely, pressing spoke CP1A may indicate the user's desire to decrease the maximum speed of motor 14. Similarly, pressing spoke CP1C may indicate the user's desire to rotate motor 14 (and thus chuck 22) in the forward direction. Conversely, pressing spoke CP1D may indicate the user's desire to rotate motor 14 (and thus chuck 22) in the reverse direction. Persons skilled in the art will recognize that the user may be able to provide other operational inputs with cross pad CP1.

FIGS. 7-9 illustrate another user control usable with power tools 10. In particular, handle 28 may have swipe pads SWP1, SWP2 and/or SWP1'. Each swipe pad SWP1, SWP2 may have two force-sensing resistors SW1 and SW2, SW3 and SW4, respectively. The output of the force-sensing resistors SW1-SW4 is provided to controller 25. Persons skilled in the art shall recognize that other force-sensing sensors can be used instead of force-sensing resistors. For example, quantum tunneling composites (QTCs) and/or piezoelectrics can be used to provide force or pressure information to controller 25.

Controller 25 can identify the force-sensing resistor within each swipe pad which was pressed first and which was pressed later. For example, controller 25 can recognize that force-sensing resistor SW2 was pressed before force-sensing resistor SW1.

Controller 25 can use this information to adjust a parameter. For example, pressing force-sensing resistor SW2 before force-sensing resistor SW1 may indicate the user's desire to increase the maximum speed of motor 14. Conversely, pressing force-sensing resistor SW1 before force-sensing resistor SW2 may indicate the user's desire to increase the maximum speed of motor 14. Alternatively, pressing force-sensing resistor SW2 before force-sensing resistor SW1 may indicate the user's desire to rotate motor 14 (and thus chuck 22) in the forward direction. Conversely, pressing force-sensing resistor SW1 before force-sensing resistor SW2 may indicate the user's desire to rotate motor 14 (and thus chuck 22) in the reverse direction. Persons skilled in the art will recognize that swipe pads may be placed anywhere on handle 28 and/or power tool 10. Preferably such swipe pads will be placed in positions that are easy to access by the user with minimal hand movement. For example, FIG. 7 shows a swipe pad SWP1' located at the bottom of handle 28 which can be easily actuated by the user's most ulnar finger, i.e., the pinky finger.

As mentioned above, handle 28 may have multiple swipe pads SWP1, SWP2. It may be preferable sometimes to ignore one swipe pad while using the input of another swipe pad. For example, if swipe pads SWP1, SWP2 are respectively placed on each side of handle 28, one swipe pad may unintentionally be activated when the user grabs the power tool 10 by handle 28.

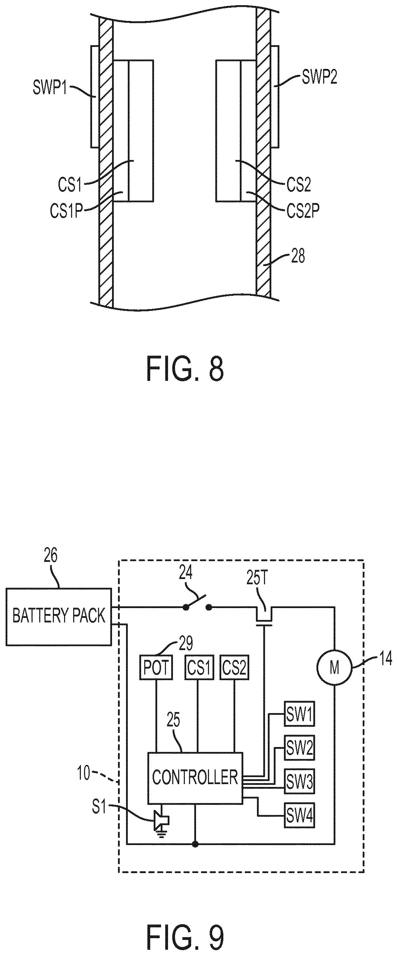

Accordingly, it is preferable to provide separate sensors to determine which hand the user uses to grab power tool 10 during operation thereof. Referring to FIG. 8, handle 28 may have two capacitance sensors CS1, CS2, disposed respectively on each side of handle 28.

Referring to FIGS. 8-9, capacitance sensors CS1, CS2 preferably include a plate CS1P, CS2P, respectively, disposed on the inside of handle 28. Each capacitance sensor CS1, CS2 may also have a circuit for coupling plate CS1P, CS2P to controller 25. Such circuit may include a controller integrated circuit, such as Analog Devices AD7147 controller. By comparing the outputs of capacitance sensors CS1, CS2, controller 25 can determine on which side the user's palm is placed on handle 28, as the closest capacitance sensor will provide a stronger signal accordingly. Alternatively, instead of using capacitance sensors CS1, CS2, switches can be placed on each side of handle 28 to detect on which side the user's palm is placed thereon.

With such arrangement, if controller 25 determines that the user's palm is placed on the right side of handle 28, it can ignore the outputs of SW1, SW2 of swipe pad SWP1. Similarly, if controller 25 determines that the user's palm is placed on the left side of handle 28, it can ignore the outputs of SW3, SW4 of swipe pad SWP2.

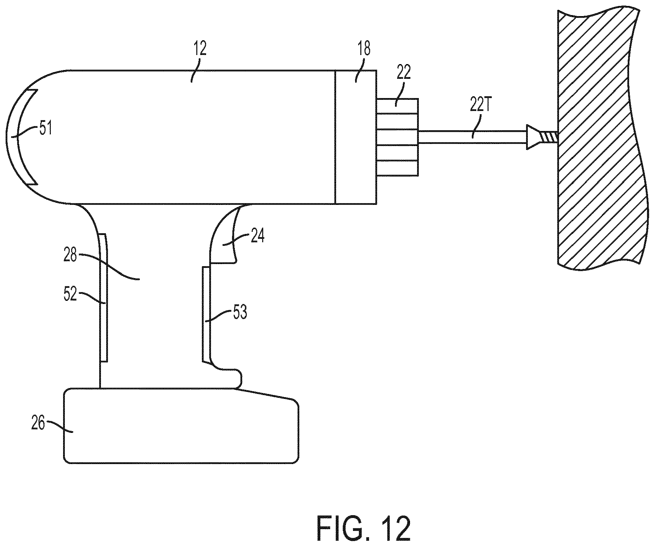

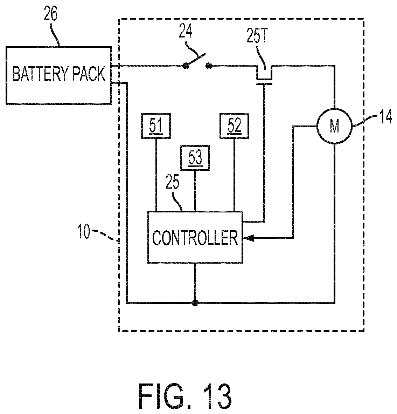

FIGS. 12-13 illustrate a different user control usable with power tools 10. In particular, a pressure sensing pad 51 is disposed on housing 12. Pressure sensing pads 52 and/or 53 may be disposed on handle 28. Pads 51-53 may have force-sensing resistors, quantum tunneling composites (QTCs) and/or piezoelectrics to provide force or pressure information to controller 25.

With such arrangement, a user can control the speed of chuck 22 by the biasing force applied on power tool 10. For example, controller 25 can combine the value outputs of pressure sensing pads 51 and 52 and subtract the value output of pressure sensing pad 53. The higher the force applied on pressure sensing pads 51 and/or 52, the higher the motor speed.

Alternatively, controller 25 can use the value outputs of pressure sensing pads 51, 52 and/or 53 to determine the rotational direction of chuck 22. For example, if the combined value outputs of pressure sensing pads 51 and 52 is larger than the value output of pressure sensing pad 53, controller 25 can rotate chuck 22 in the clockwise (forward) direction. Conversely, if the combined value outputs of pressure sensing pads 51 and 52 is smaller than the value output of pressure sensing pad 53, controller 25 can rotate chuck 22 in the counterclockwise (reverse) direction.

Persons skilled in the art will recognize that speed can be alternatively controlled by using the value outputs of pressure sensing pads 52 and/or 53. For example, if the value outputs of both pressure sensing pads 52 and 53 are combined and/or added, speed is effectively controlled by the combined "squeeze" force on both pads. Controller 25 can add the output values of pressure sensing pads 52 and/or 53 to determine how fast chuck 22 should be rotated.

Alternatively, controller 25 can use the value outputs of pressure sensing pads 51, 52 and/or 53 to determine the maximum allowable torque. For example, if the combined value outputs of pressure sensing pads 51 and 52 is larger than the value output of pressure sensing pad 53, controller 25 can control motor 14 to stop or slow down when motor 14 arrive at a particular torque value determined by the difference between the combined value outputs of pressure sensing pads 51 and 52 and the value output of pressure sensing pad 53. Conversely, if the combined value outputs of pressure sensing pads 51 and 52 is smaller than the value output of pressure sensing pad 53, controller 25 can control motor 14 so that it stops or slows down at a minimum torque threshold. Persons skilled in the art will recognize that torque may be sensed by measuring the current going through motor 14.

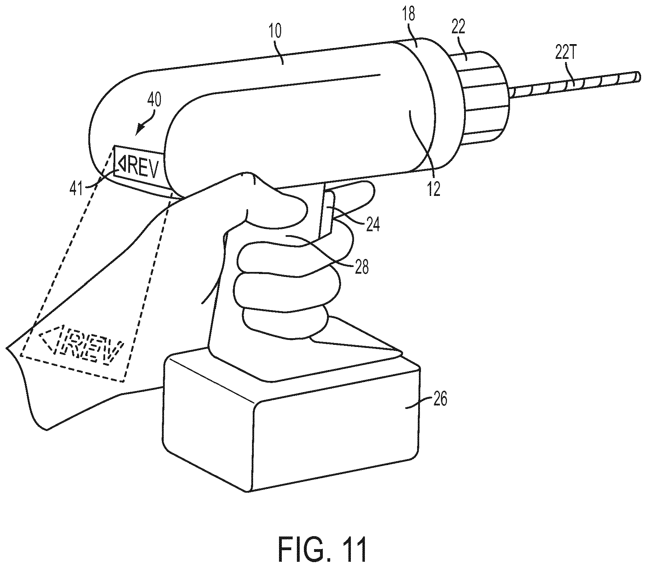

FIG. 11 shows power tool 10 a visual information mechanism 40. Visual information mechanism 40 is preferably used to communicate the status of power tool 10. Visual information mechanism 40 preferably has a display 41 (such as an e-ink display), with a back light (not shown) to project the information shown on display 41 unto the user's hand. Visual information mechanism 40 can be used, for example, to indicate the rotational direction of chuck 22, e.g., "forward" or "reverse" directions.

The rotational direction information may also be communicated with other cues, such as haptic feedback. For example, controller 25 may control motor 14 to quickly move in alternating directions (creating the haptic feedback) when the user switches the direction to "reverse." Alternatively, controller 25 may control motor 14 to move the chuck 22 in the selected direction for a short distance whenever the user switches the rotational direction.

Similarly, controller 25 may send an audio signal to speaker S1 (FIG. 9) to inform the user that the power tool 10 is in the reverse setting. Alternatively, controller 25 may use two different tones, each tone being respectively representative of the forward and reverse directions.

The description of the invention is merely exemplary in nature and, thus, variations that do not depart from the invention as defined by the claims are intended to be within the scope of the invention. Such variations are not to be regarded as a departure from the scope of the invention.

## Claims

1. A power tool comprising:
a housing (12);
a motor (14) disposed in the housing (12);
a tool holder (22) driven by the motor (14);
a control circuit (25) for controlling the motor (14);
a rotary input rotatable by the user, the rotary input being one of the group consisting of a trigger assembly (24) which comprises a trigger disposed within the housing (12), the trigger being linearly movable relative to the housing (12) for selecting the rotational speed of the motor (14), and a handle (28); and
a rotational sensor (29) for sensing the rotational position of the rotary input relative to the housing (12);
wherein the control circuit (25) receives input from the rotational sensor;
**characterized in that**:
the trigger of the trigger assembly (24) is also rotatable relative to the housing (12) about a first axis for selecting the rotational direction of the motor (14); and
the handle (28) is rotatably attached to the housing (12).

2. The power tool of Claim 1, wherein the rotational sensor (29) is one of the group consisting of a potentiometer, an optoelectronic sensor, force-sensing resistors, quantum tunneling composites and switches.

3. The power tool of Claim 1, wherein the control circuit (25) controls at least one of the speed and the rotational direction of the motor (14) according to the input from the rotational sensor (29).

4. The power tool of any of the previous Claims, wherein the trigger assembly (24) comprises a spring (24SS) for biasing the trigger towards a rest position.

5. The power tool of any of the previous Claims, wherein the trigger is rotatable about a second axis substantially perpendicular to the first axis.

6. The power tool of any of the previous Claims, wherein the trigger assembly (24) comprises at least one sensor (29, 24S) for detecting the position of the trigger, the at least one sensor (29, 24S) being connected to the control circuit (25).

## Patentansprüche

1. Elektrowerkzeug, umfassend:
ein Gehäuse (12);
einen Motor (14), der in dem Gehäuse (12) angeordnet ist;
eine Werkzeughalterung (22), die von dem Motor (14) angetrieben wird;
einen Regelkreis (25) zum Steuern des Motors (14);
eine von dem Benutzer drehbare Dreheingabe, wobei die Dreheingabe eine aus der Gruppe ist, bestehend aus einer Auslöserbaugruppe (24), die einen innerhalb des Gehäuses (12) angeordneten Auslöser umfasst, wobei der Auslöser relativ zu dem Gehäuse (12) linear bewegbar ist, um die Drehgeschwindigkeit des Motors (14) auszuwählen, und einem Griff (28); und
einen Drehsensor (29) zum Erfassen der Drehposition der Dreheingabe relativ zu dem Gehäuse (12);
wobei der Regelkreis (25) eine Eingabe von dem Drehsensor empfängt;
**dadurch gekennzeichnet, dass**:
der Auslöser der Auslöserbaugruppe (24) ebenfalls relativ zu dem Gehäuse (12) um eine erste Achse drehbar ist, um die Drehrichtung des Motors (14) auszuwählen; und
der Griff (28) drehbar an dem Gehäuse (12) befestigt ist.

2. Elektrowerkzeug nach Anspruch 1, wobei der Drehsensor (29) eines aus der Gruppe ist, bestehend aus einem Potentiometer, einem opto-elektronischen Sensor, krafterfassenden Widerständen, Quantentunnelverbundwerkstoffen und Schaltern.

3. Elektrowerkzeug nach Anspruch 1, wobei der Regelkreis (25) mindestens eines von der Geschwindigkeit und der Drehrichtung des Motors (14) gemäß der Eingabe von dem Drehsensor (29) steuert.

4. Elektrowerkzeug nach einem der vorstehenden Ansprüche, wobei die Auslöserbaugruppe (24) eine Feder (24SS) zum Vorspannen des Auslösers hin zu einer Ruheposition umfasst.

5. Elektrowerkzeug nach einem der vorstehenden Ansprüche, wobei der Auslöser um eine zweite Achse drehbar ist, die im Wesentlichen senkrecht zu der ersten Achse ist.

6. Elektrowerkzeug nach einem der vorstehenden Ansprüche, wobei die Auslöserbaugruppe (24) mindestens einen Sensor (29, 24S) zum Erfassen der Position des Auslösers umfasst, wobei der mindestens eine Sensor (29, 24S) mit dem Regelkreis (25) verbunden ist.

## Revendications

1. Outil électrique comprenant :
un boîtier (12) ;
un moteur (14) disposé dans le boîtier (12) ;
un porte-outil (22) entraîné par le moteur (14) ;
un circuit de commande (25) pour la commande du moteur (14) ;
une entrée rotative pouvant tourner par l'utilisateur, l'entrée rotative étant un à partir du groupe constitué par un ensemble de déclenchement (24) qui comprend un déclencheur disposé dans le boîtier (12), le déclencheur étant mobile linéairement par rapport au boîtier (12) pour la sélection de la vitesse rotative du moteur (14), et une poignée (28) ; et
un capteur rotatif (29) pour la détection de la position rotative de l'entrée rotative par rapport au boîtier (12) ;
dans lequel le circuit de commande (25) reçoit l'entrée du capteur rotatif;
**caractérisé en ce que** :
le déclencheur de l'ensemble de déclenchement (24) peut aussi tourner par rapport au boîtier (12) autour d'un premier axe pour la sélection de la direction de rotation du moteur (14) ;
et
la poignée (28) est attachée de manière à pouvoir tourner au boîtier (12).

2. Outil électrique selon la revendication 1, dans lequel le capteur rotatif (29) est un à partir du groupe constitué par un potentiomètre, un capteur optoélectronique, des résistances de détection de force, des composites à effet de tunnel quantique et des commutateurs.

3. Outil électrique selon la revendication 1, dans lequel le circuit de commande (25) commande au moins une de la vitesse et la direction de rotation du moteur (14) selon l'entrée du capteur de rotation (29).

4. Outil électrique selon l'une quelconque des revendications précédentes, dans lequel l'ensemble de déclenchement (24) comprend un ressort (24SS) pour la sollicitation du déclencheur vers une position de repos.

5. Outil électrique selon l'une quelconque des revendications précédentes, dans lequel le déclencheur peut tourner autour d'un second axe sensiblement perpendiculaire au premier axe.

6. Outil électrique selon l'une quelconque des revendications précédentes, dans lequel l'ensemble de déclenchement (24) comprend au moins un capteur (29, 24S) pour la détection de la position du déclencheur, l'au moins un capteur (29, 24S) étant raccordé au circuit de commande (25).
